# EUROPÄISCHE PATENTANMELDUNG

(11) **EP 2 149 810 A2**
(43) Veröffentlichungstag der Anmeldung: **03.02.2010**
(21) Anmeldenummer: 09174813.7
(22) Anmeldetag: 30.08.2005
(51) Int. Cl.: G02B 27/22

(54) **Anordnung zur dreidimensional wahrnehmbaren Darstellung**

(30) Priorität: 31.08.2004 DE 102004042498; 01.09.2004 DE 102004042983; 08.02.2005 DE 102005006044
(62) Teilanmeldung aus: 05777383.0
(71) Anmelder: X3D Technologies GmbH, 07745 Jena (DE)
(72) Erfinder: Tzschoppe, Wolfgang, 07751, Jena-Rothenstein (DE); Otte, Stephan, 07747, Jena (DE); Brüggert, Thomas, 07745, Jena (DE); Thieme, Gunther, 99510, Apolda (DE); Klippstein, Markus, 07751, Jena (DE); Hopewell, William Dane, New Milford, CT 06776 (US)
(74) Vertreter: Harrison, Robert John

(57) **Zusammenfassung**

Die Erfindung bezieht sich auf eine Anordnung zur dreidimensional wahrnehmbaren Darstellung von Bildern, umfassend eine Bildwiedergabeeinrichtung (1) mit einer Vielzahl von Bildelementen, die in vorgegebener Zuordnung Informationen aus einer oder mehreren ansichten einer Szene, eines Gegenstandes, oder eines Textes repräsentieren, ein in Blickrichtung (B) eines Betrachters (6) vor der Bildwiedergabeeinrichtung (1) angeordnetes Filterarray (2), das eine Vielzahl von in bestimmten Wellenlängenbereichen durchlässigen Filterelementen (a) sowie von für sichtbares Licht im Wesentlichen undurchlässigen Filterelementen (2b) umfasst, wobei die Filterelemente (2a, 2b) auf einem transparenten Substrat (3), welches sich vor der Bildwiedergabeeinrichtung (2) befindet, aufgebracht wird.

## Beschreibung

### Gebiet der Erfindung

Die Erfindung bezieht sich auf eine Anordnung zur dreidimensional wahrnehmbaren Darstellung von Bildern, umfassend eine Bildwiedergabeeinrichtung mit einer Vielzahl von Bildelementen, die in vorgegebener Zuordnung Informationen aus einer oder mehreren Ansichten einer Szene, eines Gegenstandes, oder eines Textes repräsentieren, ein in Blickrichtung eines Betrachters vor der Bildwiedergabeeinrichtung angeordnetes Filterarray, das eine Vielzahl von in bestimmten Wellenlängenbereichen durchlässigen Filterelementen sowie von für sichtbares Licht im wesentlichen undurchlässigen Filterelementen umfasst, wobei die Filterelemente auf einem transparenten Substrat, welches sich vor der Bildwiedergabeeinrichtung befindet, aufgebracht sind.

### Stand der Technik

Im Stand der Technik sind derartige Anordnungen, beispielsweise basierend auf Lentikularschirmen, Filterarrays und Barriereschirmen bekannt. Nachteilig für den Betrachter sind oftmals Reflexionen auf der Bildoberfläche. Die DE 200 22 583 UI offenbart zwar Mittel zur Minimierung der Reflexe durch äußeren Aufdruck eines absorbierenden Filterarrays. Allerdings ist dabei die Widerstandsfähigkeit der äußeren Oberfläche sehr eingeschränkt. Ein gemäß dieser Lehre etwa in üblichem Siebdruck außen aufgedrucktes Filterarray, welches nicht durch thermische Behandlung in den Zustand einer verbesserten Widerstandsfähigkeit überführt wurde, ist leicht mit einem Schlüssel oder ähnlichem spitzen Gegenstand zerkratzbar und damit für den kommerziellen Einsatz nur bedingt tauglich.

### Beschreibung der Erfindung

Es ist daher Aufgabe der Erfindung, die Entstehung von Störlichtreflexen bei Anordnungen der eingangs genannten Art weitestgehend zu hemmen und somit die Wahrnehmbarkeit der 3D-Darstellung zu verbessern, wobei gleichzeitig möglichst auch eine hohe Widerstandsfähigkeit der äußeren Anordnungsoberfläche verwirklicht werden soll. Diese Ziele sollen mit möglichst einfachen Mitteln erreicht werden.

Diese Aufgabe wird bei einer Anordnung der eingangs beschriebenen Art dadurch gelöst, dass Mittel zur Verhinderung der Entstehung von Störlichtreflexen vorgesehen sind. Auf diese Weise wird die Wahrnehmbarkeit der 3D-Darstellung verbessert.

In einer bevorzugten Ausgestaltung der Erfindung sind die für sichtbares Licht im Wesentlichen undurchlässigen Filterelemente in Blickrichtung des Betrachters vom auf dem transparenten Substrat aufgebracht, wobei als Mittel zur Verhinderung der Entstehung von Störlichtreflexen eine mindestens auf der dem Betrachter zugewandten Seite entspiegelte, transparente Scheibe in Blickrichtung vor dem Filterarray angeordnet ist.

Durch die Aufbringung der für sichtbares Licht im Wesentlichen undurchlässigen Filterelemente in Blickrichtung eines Betrachters vorn auf einem transparenten Substrat kann eine recht gute Reflexminderung bezüglich äußeren Störlichts erreicht werden. Gleichzeitig sorgt die mindestens einseitig entspiegelte transparente Scheibe vor dem Filterarray für einen guten Schutz desselben, wobei wegen der Entspiegelung nur geringfügige Störlichtreflexe auf Grund der transparenten Scheibe hinzukommen können. Somit wird die Aufgabe, die Entstehung von Störlichtreflexen weitestgehend zu hemmen und gleichzeitig eine hohe Widerstandsfähigkeit der äußeren Anordnungsoberfläche zu erzielen, durch die erfindungsgemäße Anordnung gelöst.

Gegenüber einer mattierenden Schicht hat die entspiegelte Scheibe den Vorteil, dass die bei ersteren durch unerwünschte Streuung des transmittierten Nutzlichts auftretenden Geisterbilder weitestgehend verhindert werden.

Eine andere Maßnahme im Falle einer mattierenden statt entspiegelnden Schicht wäre die Verringerung des Abstandes zwischen der Mattierungsschicht und dem Raster der bilderzeugenden (Sub-)Pixel der Bildwiedergabeeinrichtung verkleinert wird. Bei einem TFT-LCD-Bildschirm kann dies beispielsweise durch einen unsymmetrischen Schichtaufbau des LC-Panels realisiert werden, indem auf eine betrachterseitige Glasplatte ganz verzichtet wird. Die auf der dem Betrachter abgewandten Seite angebrachte Glasplatte kann in ihrer Dicke verstärkt werden, falls es sich aus Stabilitätsgründen als notwendig erweisen sollte. Bei einem Plasma-Bildschirm kann die frontseitige, be- schichtete Glasplatte auch in ihrer Dicke reduziert werden.

Anstelle einer ant-glare-Mattierungsschicht kann jedoch, wie oben schon gesagt, eine Vielfachbeschichtung zur Entspiegelung auf den Front-Polarisator oder die Frontscheibe des TFT-Bildschirms bzw. die frontseitige Glasplatte beim Plasma-Bildschirm aufgebracht werden. Eine solche Beschichtung führt zu einer gleichsam kontinuierlichen Anpassung der optischen Brechzahlen der aneinandergrenzenden optischen Medien Luft und Polarisationsfilter bzw. Glasplatte.

Die transparente Scheibe kann beispielsweise aus Kunststoff oder Glas bestehen und vorzugsweise beidseitig mit einer Vielfachbeschichtung entspiegelt sein. Auch Sicherheitsglas kann zum Einsatz kommen.

Für alle Ausgestaltungen gilt, dass zwischen der transparenten Scheibe und den für sichtbares Licht im Wesentlichen undurchlässigen Filterelementen ein mit Luft gefüllter Abstand von einschließlich 0mm bis einschließlich 4mm vorgesehen ist. In besonderen Anwendungsfällen kann der Abstand auch größer als 4mm sein.

Insbesondere beim Einsatz von Plasmabildschirmen als Bildwiedergabeeinrichtung kann es von Vorteil stein, wenn zwischen dem transparenten Substrat und der bildgebenden Oberfläche der Bildwiedergabeeinrichtung eine weitestgehend oder vollkommen transparente, elektrisch leitfähige Scheibe, bevorzugt aus Verbundglas bestehend, angeordnet ist.

Ungeachtet dessen ist es auch möglich, dass das transparente Substrat selbst eine weitestgehend oder vollkommen transparente, elektrisch leitfähige Glasscheibe ist, welche bevorzugt aus Verbundglas besteht.

In einer weiteren bevorzugten Ausgestaltung der Erfindung sind die für sichtbares Licht im wesentlichen undurchlässigen Filterelemente in Blickrichtung eines Betrachters vorn oder hinten auf dem transparenten Substrat aufgebracht und weisen eine diffus streuende und/oder matte Oberfläche auf. Die für bestimmte Wellenlängenbereiche im Wesentlichen durchlässigen Filterelemente sind dabei bevorzugt für sichtbares Licht im Wesentlichen durchlässig.

Auf Grund der diffus streuenden und/oder matten Oberfläche der für sichtbares Licht im wesentlichen undurchlässigen Filterelemente kann eine recht gute Reflexminderung bezüglich äußeren Störlichts erreicht werden, insbesondere dann, wenn sich die besagten Filterelemente in Blickrichtung eines Betrachters vor auf dem transparenten Substrat befinden.

Das transparente Substrat ist zweckmäßigerweise mindestens einseitig, bevorzugt beidseitig mittels einer Vielfachbeschichtung entspiegelt. Auch die für sichtbares Licht im Wesentlichen durchlässigen Filterelemente können auf der dem Betrachter zugewandten Seite mit einer Antireflexionsvielfachbeschiehtung entspiegelt sein, sofern sie vorn, d.h. auf der dem. Betrachter zugewandten Seite des transparenten Substrats, angebracht sind.

In einer bevorzugten Variante dieser Ausgestaltung sind die für sichtbares Licht im Wesentlichen undurchlässigen Filterelemente in Blickrichtung eines Betrachters vorn auf dem transparenten Substrat aufgebracht. Dabei wird die jeweilige diffus streuende und/oder matte Oberfläche der für sichtbares Licht im Wesentlichen undurchlässigen Filterelemente durch eine - für LCD-Panels übliche - *Anti*-*glare*-Mattierungsschicht gebildet, welche als zusätzliche Komponente auf den für sichtbares Licht im Wesentlichen undurchlässigen Filterelementen aufgebracht ist. Insbesondere für Innenraum- Nutzung wird so eine sehr gute Umgebungstauglichkeit erreicht. Dies wird umso besser, je größer das Verhältnis der Flächen von undurchlässigen zu durchlässigen Filterbereichen ist - je mehr Ansichten genutzt werden können, desto größer wird dieses Verhältnis im allgemeinen.

Die Herstellung solcher mehrkomponentiger Filterarrays erfolgt bevorzugt nach den folgenden Verfahrensschritten: Zunächst wird eine für LCD-Panels übliche Anti-glare-Mattierungsschicht auf einem Filterarray vollflächig aufgebracht. Anschließend wird die matte Oberfläche im wesentlichen derjenigen Flächenabschnitte auf der Mattierungs- schicht, die bei paralleler Projektion entlang der Flächennormalen der Schicht auf den für sichtbares Licht im wesentlichen durchlässigen Filterelementen mit selbigen deckungsgleich liegen, entfernt. Dies kann durch Bestrahlen mit Laserstrahlung geschehen, so dass am Ort der genannten Flächenabschnitte anschließend eine ebene, nicht streuende Oberfläche entsteht, und / oder durch Ausschneiden der entsprechenden Flächenabschnitte, z.B. mittels eines Schneidwerkzeuges oder einer Stanze, und/oder Aufschmelzen und Abkühlen der entsprechenden Flächenabschnitte, so dass am Ort der besagten Flächenabschnitte anschließend eine plane, nicht-streuende Oberfläche entsteht, und / oder auch durch Anätzen der entsprechenden Flächenabschnitte mittels einer Säure oder einer anderen Chemikalie, so dass am Ort der besagten Flächenabschnitte hernach eine ebene, nicht streuende Oberfläche entsteht.

Es ist hier selbstverständlich auch möglich, Flächenabschnitte mit einer nicht-matten Oberfläche zu versehen, die etwas größer oder kleiner als die durch die vorgenannte Projektion beschriebenen sind.

Alternativ kann die Herstellung auch nach den folgenden Verfahrensschritten erfolgen: Zunächst wird ein Filterarray bereitgestellt, dessen für sichtbares Licht im Wesentlichen undurchlässige Filterelemente auf einem transparenten Substrat aufgebracht sind. Dann wird eine diffus streuende und/oder matte Oberfläche auf den für sichtbares Licht im Wesentlichen undurchlässigen Filterelemente geschaffen. Dies kann durch Bestrahlung der besagten Filterelemente mit Laserstrahlung geschehen, so dass dort hernach eine diffus streuende und/oder matte Oberfläche entsteht, und/oder durch Mechanisches Anrauhen, z.B. mittels Schmirgelpapier, der besagten Filterelemente, so dass dort anschließend eine diffus streuende und/oder matte Oberfläche entsteht, und/oder durch Aufschmelzen und Abkühlen der besagten Filterelemente, so dass dort hernach eine diffus streuende und/oder matte Oberfläche entsteht, und/oder durch Anätzen der besagten Filterelemente mittels einer Säure, so dass dort anschließend eine diffus streuende und/oder matte Oberfläche entsteht.

Eine weitere Verbesserung wird erreicht, wenn wenigstens die transparenten, d.h. für sichtbares Licht durchlässigen Filterelemente mit einer Vielfachbeschichtung zur Entspiegelung versehen sind. Für Anwendungen im Außenbereich und bei direkter Sonnenbestrahlung ist eine zusätzliche Vielfachbeschichtung zur Entspiegelung auch der diffus streuenden, mattierten, für sichtbares Licht im wesentlichen undurchlässigen Filterelemente zweckmäßig. Für die Anwendung im Außenbereich können diese Filterelemente aber stattdessen auch eine regulär reflektierende Oberfläche aufweisen.

Die erfinderische Lösung ist im Übrigen auch anwendbar, wenn das Filterarray auf dem transparenten Substrat unmittelbar in einer Bildwiedergabeeinrichtung, d.h. beispielsweise zwischen einer flächigen Hintergrundbeleuchtung und einem transmissiven Bildgeber wie z.B. einem LCD-Panel, eingebaut ist.

Weiterhin macht die erfinderische Lösung das Vorhandensein einer eigenen Anti-glare-Mattierungsschicht der Bildwiedergabeeinrichtung obsolet. Eine solche Schicht kann, muss jedoch nicht zwingend vorhanden sein.

Das Filterarray kann beispielsweise als belichteter oder geplotteter, entwickelte fotografischer Film ausgebildet sein, wobei das Plastiksubstrat des Films und optional gleichzeitig eine in Blickrichtung dahinter befindliche Glas- oder Kunststoffscheibe, auf welche das Plastiksubstrat des Films laminiert ist, dem besagten transparenten Substrat entspricht. Dabei werden die besagten für sichtbares Licht im Wesentlichen undurchlässigen Filterelemente durch die geschwärzte Filmemulsion bzw. die fotografischen Silberkömer gebildet. Die für sichtbares Licht durchlässigen Filterelemente können durch Nichtschwärzung vor der Entwicklung gebildet werden.

In einer weiteren Ausgestaltung der Erfindung sind alle Filterelemente in Blickrichtung des Betrachters auf der Rückseite des transparenten Substrats aufgebracht, und die in Blickrichtung des Betrachters vordere Seite des transparenten Substrats ist mit einer entspiegelten Oberfläche versehen. Dabei sind nur diejenigen Oberflächenabschnitte der Rückseite des transparenten Substrats, auf denen die in bestimmten Wellenlängen- bereichen durchlässigen Filterelemente aufgebracht sind, ebenfalls mit einer entspiegelten Oberfläche versehen.

In einer ähnlichen Ausgestaltung der Erfindung, bei der ebenfalls alle Filterelemente in Blickrichtung des Betrachters auf der Rückseite des transparenten Substrats aufgebracht sind, ist nur die in Blickrichtung des Betrachters vordere Seite des transparenten Substrats mit einer entspiegelten Oberfläche versehen ist, nicht jedoch die Rückseite.

Das transparente Substrat besteht in beiden Ausgestaltungen bevorzugt aus Glas oder Kunststoff. Bevorzugt sind außerdem alle entspiegelten Oberflächen auf dem transparenten Substrat als Vielfachbeschichtung ausgebildet, bevorzugt als interferenzoptische Entspiegelung. Derartige Maßnahmen sind dem Fachmann hinlänglich bekannt.

In einer besonders bevorzugten Ausführung sind die für sichtbares Licht im wesentlichen undurchlässigen Filterelemente auf einer Folie aufgebracht, welche auf der Rückseite des transparenten Substrates angebracht - z.B. aufgeklebt oder laminiert - ist. Auch die durchlässigen Filterelemente sind zweckmäßigerweise auf dieser Folie aufgebracht. Die Filterelemente können als - bevorzugt matte - schwarze Farbe auf die Folie aufgebracht werden, in der Regel durch einen Druckprozess in der Strukturform des Filterarrays. Besonders bevorzugt ist die Folie selbstklebend ausgebildet und ihre mit der Farbe bzw. den Filterelementen versehene Seite ist dem transparenten Substrat zugewandt. Selbstverständlich kann die mit den Filterelementen bzw. der Farbe versehene Seite auch vom transparenten Substrat abgewandt sein.

In einer besonders bevorzugten Variante dieser Ausführung mit Folie liegen die Brechungsindizes von transparentem Substrat und der Klebe- bzw. Laminierschicht - die Schicht also, mit der die dauerhafte Verbindung zwischen Folie und Substrat hergestellt wird - um nicht mehr als ein Drittel, bevorzugt nicht mehr als 20% auseinander. Ebenso liegen die Brechungsindizes der Klebe- bzw. Laminierschicht und der Folie nicht mehr als ein Drittel, bevorzugt um nicht mehr als 20% auseinander. Mit einer solchen Konfiguration ergeben sich besonders günstige Eigenschaften im Hinblick auf die Betrachtung.

In allen Ausgestaltungen sind bevorzugt als in bestimmten Wellenlängenbereichen durchlässigen Filterelementen ausschließlich für sichtbares Licht im wesentlichen durchlässige Filterelemente, sowie für sichtbares Licht im wesentlichen undurchlässige Filterelemente auf dem Filterarray vorgesehen. Die einzelnen Filterelemente des Filterarrays weisen jeweils einen beliebigen, bevorzugt einen rechteckigen Umriss auf.

Als Bildwiedergabeeinrichtung kommen beispielsweise ein Farb-LC-Display, ein Plasmadisplay, ein OLED, ein Projektionsdisplay oder ein Elektrolumineszenzdisplay in Frage, wobei auch andere Arten von Bildwiedergabeeinrichtungen nicht ausgeschlossen sind.

In einigen Ausgestaltungen der Erfindung sind die für sichtbares Licht im wesentlichen undurchlässigen Filterelemente auf dem transparenten Substrat, bevorzugt einer - optional entspiegelten - Glas- oder Kunststoffscheibe, als - bevorzugt matte - schwarze Farbe aufgebracht. Anstelle der Farbe ist selbstverständlich auch ein anderes Material, z.B. eine geeignete Kunststoffschicht, einsetzbar. Im Falle der Verwendung von Farbe kann diese durch einen Druckprozess, beispielsweise durch Siebdruck, in der Strukturform des Filterarrays aufgebracht werden. Im einfachsten Fall werden dabei im Übrigen die für sichtbares Licht im Wesentlichen durchlässigen Filterelemente durch Weglassen der Farbe gebildet. Denkbar ist auch ein zunächst flächendeckender Farbauftrag, wobei die Struktur des Filterarrays dann nachträglich, beispielsweise mittels Laserstrahlenablation, ausgearbeitet wird. In beiden Fällen wird die Farbe nach dem Aufbringen vorteilhaft thermisch behandelt. Dies erhöht ihre Widerstandsfähigkeit und kann auch hilfreich bei der Erzeugung einer diffus streuenden und / oder matten Oberfläche sein.

Ferner ist zwischen dem transparenten Substrat und der bildgebenden Oberfläche der Bildwiedergabeeinrichtung ein Abstand von einschließlich 0mm bis einschließlich 24mm vorgesehen. Der Abstand wird dabei als von den jeweils einander zugewandten Oberflächen des transparenten Substrates und der Bildwiedergabeeinrichtung gemessen betrachtet. In Ausnahmefällen kann der Abstand auch größer sein. Das transparente Substrat selbst ist vorzugsweise wenige 100 µm bis wenige Millimeter dick. Liegen die RGB-Farbsubpixel beispielsweise im Größenbereich von jeweils 100 µm Breite, so ist das transparente Substrat bevorzugt ungefähr einen Millimeter dick. Es entspricht dann gleichzeitig einer Art Abstandshalter zwischen Filterarray und Bildwiedergabeeinrichtung. Sind die Subpixel etwa doppelt so dick, so kann das transparente Substrat durchaus wenige bis einige Millimeter dick sein.

Es können außerdem Mittel zur wahlweise dreidimensional wahrnehmbaren oder zweidimensionalen Darstellung an der erfindungsgemäßen Anordnung zum Einsatz kommen, insofern diese nicht zu einer erhöhten Störlichtreflexempfindlichkeit führen bzw. die gegebene Widerstandsfähigkeit der äußeren Anordnungsoberfläche mindern.

Zur Strukturierung und Herstellung von Filterarrays sei hier stellvertretend auf die Schriften DE 201 21 31 8 U1, WO 01/56265, PCT/EP2004/004464, PCT/EP2004/001 833 sowie DE 1 0145 1 33 der Anmeldern verwiesen. Selbstredend wird auch davon ausgegangen, dass die Zuordnung von Informationen aus einer oder mehreren Ansichten einer Szene/eines Gegenstandes/eines Textes zu der Vielzahl von Bildelementen in geeigneter Weise, insbesondere nach Lehre einer oder mehrerer der vorgenannten Schriften, erfolgt.

### Kurze Beschreibung der Zeichnungen

Die Erfindung soll im folgenden anhand von Ausführungsbeispielen näher erläutert werden. In den dazugehörigen Zeichnungen zeigt
Fig. 1 eine erste Ausgestaltung der Erfindung,
Fig. 2 eine weitere Ausgestaltung der Erfindung, und
Fig. 3 eine dritte Ausgestaltung der Erfindung.

### Ausführliche Beschreibung der Zeichnungen

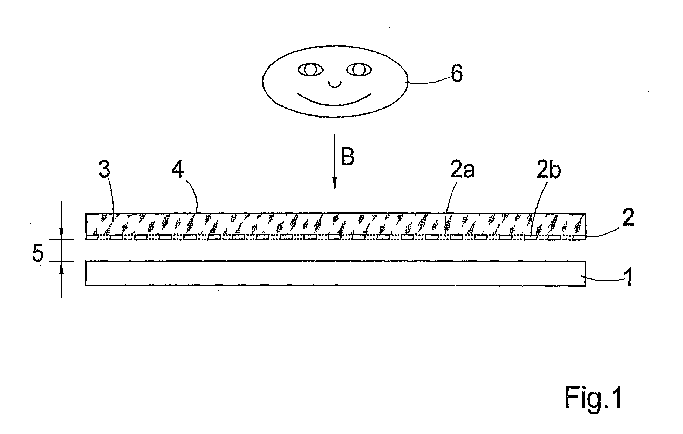

In Fig. 1 ist eine Prinzipskizze einer ersten Ausgestaltung der Erfindung gezeigt. Die erfindungsgemäße Anordnung umfasst eine Bildwiedergabeeinrichtung 1 mit einer Viel- zahl von Bildelementen, die in vorgegebener Zuordnung Informationen aus einer oder mehreren Ansichten einer Szene, eines Gegenstandes, oder eines Textes repräsentieren, außerdem ein in Blickrichtung B eines Betrachters 6 vor der Bildwiedergabeeinrichtung 1 angeordnetes Filterarray 2, das eine Vielzahl von in bestimmten Wellenlängenbereichen durchlässigen Filterelementen 2a sowie von für sichtbares Licht im Wesentlichen undurchlässigen Filterelementen 2b umfasst, wobei alle Filterelemente 2a, 2b des Filterarrays 2 in Blickrichtung B des Betrachters 6 auf der Rückseite eines transparenten Substrates 3, welches sich vor der Bildwiedergabeeinrichtung 1 befindet, aufgebracht sind.

Zur Verhinderung der Entstehung von Störlichtreflexen ist die in Blickrichtung B eines Betrachters 6 vordere Seite 4 des transparenten Substrates 3 mit einer entspiegelten Oberfläche versehen ist. Dabei sind nur diejenigen Oberflächenabschnitte der Rückseite des transparenten Substrates 3, auf welchen die in bestimmten Wellenlängenbereichen durchlässigen Filterelemente 2a aufgebracht sind, ebenfalls mit einer entspiegelten Oberfläche versehen. Die anderen Oberflächenabschnitte auf der Rückseite des transparenten Substrates 3, auf welchen die für sichtbares Licht im wesentlichen undurchlässigen Filterelementen 2b aufgebracht sind, sind jedoch nicht mit einer entspiegelten Oberfläche versehen.

In der beispielhaften Ausgestaltung sind ausschließlich für sichtbares Licht im Wesentlichen durchlässige 2a und im Wesentlichen undurchlässige 2b Filterelemente auf dem Filterarray 2 vorgesehen. Ferner besteht das transparente Substrat 3 aus Glas, z.B. Conturan der Schott-Glaswerke Grünenplan/Deutschland.

Alle entspiegelte Oberflächen auf dem transparenten Substrat 3 sind als Vielfachbeschichtung ausgebildet. Derartige Maßnahmen sind dem Fachmann hinlänglich bekannt. Das transparente Substrat 3 ist über Abstandshalter an der Bildwiedergabeeinrichtung 1 befestigt, z.B. angeklebt.

Als Bildwiedergabeeinrichtung 1 wird beispielsweise ein Farb-LC-Display vom Typ NEC LCD4000 verwendet.

Die einzelnen Filterelemente 2a, 2b des Filterarrays 2 weisen jeweils einen rechteckigen Umriss auf.

Vorteilhaft sind die für sichtbares Licht im wesentlichen undurchlässigen Filterelemente 2b durch einen Druckprozess als matte schwarze Farbe auf dem transparenten Substrat 3 auf dessen Rückseite aufgebracht, während die für sichtbares Licht im wesentlichen durchlässigen Filterelemente 2a einfach durch Weglassen der Farbe an den entsprechenden Stellen erzeugt werden. Die Farbe wird hierzu in der Strukturform des Filterarrays 2 aufgedruckt.

Um zu gewährleisten, dass diejenigen Oberflächenabschnitte der Rückseite des transparenten Substrates 3, aufweichen die in bestimmten Wellenlängenbereichen durchlässigen Filterelemente 2a aufgebracht sind, mit einer entspiegelten Oberfläche versehen sind, wobei jedoch diejenigen Oberflächenabschnitte der Rückseite des transparenten Substrates 3, aufweichen die für sichtbares Licht im wesentlichen undurchlässigen Filterelementen 2b aufgebracht sind, nicht mit einer entspiegelten Oberfläche versehen sind, kann überdies folgende Herstellungsweise Anwendung finden: Zunächst ist nur die vordere Seite 4 des transparenten Substrates 3 mit einer entspiegelten Oberfläche versehen, während die Rückseite unentspiegelt ist. Auf die Rückseite werden die für sichtbares Licht im Wesentlichen undurchlässigen Filterelemente 2b aufgedruckt. Anschließend wird eine zusätzliche Entspiegelungsfolie, bevorzugt eine adhäsive Vielfachentspiegelungsfolie, auf die mit der Farbe versehene Rückseite aufgebracht, z.B. durch Anpressen zwischen zwei Rollen.

Bevorzugt wird die Farbe nach dem Aufbringen thermisch behandelt, um ihre Widerstandsfähigkeit zu verbessern.

Beispielhaft ist zwischen dem transparenten Substrat 3 und der bildgebenden Oberfläche der Bildwiedergabeeinrichtung 1 ein Abstand 5 von 11 Millimetern vorgesehen.

Auf die oben beschriebene Weise wird die Entstehung von Störlichtreflexen weitestgehend gehemmt und somit wird die Wahrnehmbarkeit der 3D-Darstellung verbessert. Dabei wird gleichzeitig eine hohe Widerstandsfähigkeit der äußeren Anordnungsoberfläche verwirklicht. Die Erfindung ist überdies mit einfachen Mitteln umsetzbar.

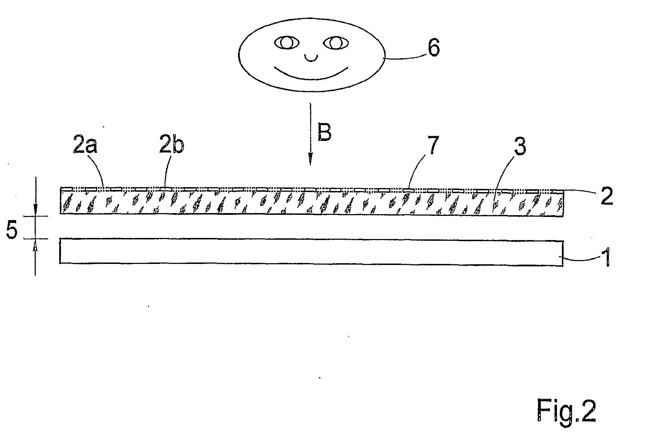

In Fig. 2 ist eine zweite Ausgestaltung der Erfindung gezeigt. Die dargestellte Anordnung umfasst eine Bildwiedergabeeinrichtung 1 vom Typ NEC LCD4000 mit 1 280 Spalten und 768 Zeilen von vollfarbigen Bildelementen - jeweils aus einem roten, grünen und blauen Farbsubpixel bestehend -, die in vorgegebener Zuordnung Informationen aus einer oder mehreren Ansichten einer Szene, eines Gegenstandes, oder eines Textes repräsentieren, sowie ein in Blickrichtung B eines Betrachters 6 vor der Bildwiedergabeeinrichtung 1 angeordnetes Filterarray 2, das eine Vielzahl von für sichtbares Licht im wesentlichen durchlässigen und für sichtbares Licht im wesentlichen undurchlässigen Filterelementen 2a, 2b umfasst. Im Unterschied zum in Fig. 1 gezeigten Beispiel sind die für sichtbares Licht im Wesentlichen undurchlässigen Filterelemente 2b in Blickrichtung B des Betrachters 6 vom auf dem transparenten Substrat 3 - welches sich vor der Bildwiedergabeeinrichtung 1 befindet, aufgebracht sind. Außerdem weisen die für sichtbares Licht im wesentlichen undurchlässigen Filterelemente 2b eine diffus streuende und / oder matte Oberfläche 7 auf.

Das transparente Substrat 3 ist eine beidseitig mittels Vielfachbeschichtung entspiegelte, 3 mm dicke Glasscheibe vom Typ Conturan, aufweiche die für sichtbares Licht im wesentlichen undurchlässigen Filterelemente 2b als matte schwarze Farbe aufgebracht sind. Diese Farbe ist durch einen Siebdruckprozess in der Strukturform des Filterarrays 2 aufgebracht. Vorteilhaft wird die Farbe nach dem Aufbringen thermisch behandelt. Dies erhöht ihre Widerstandsfähigkeit und/oder ist hilfreich zur Erlangung einer diffus streuenden und/oder matten Oberfläche 7. Die für sichtbares Licht im Wesentlichen durchlässigen Filterelemente 2a werden im übrigen durch einfaches Weglassen der Farbe gebildet.

Die einzelnen Filterelemente 2a, 2b des Filterarrays 2 weisen jeweils einen beliebigen, bevorzugt einen rechteckigen Umriss auf. Weiterhin ist zwischen dem transparenten Substrat 3, d.h. der Conturan-Scheibe, und der bildgebenden Oberfläche der Bildwiedergabeeinrichtung 1 ein Abstand 5 von 8mm vorgesehen.

Eine spezielle Ausgestaltung dieses Beispiels sieht vor, dass die jeweilige diffus streu- ende und/oder matte Oberfläche 7 der für sichtbares Licht im wesentlichen undurchlässigen Filterelemente 2b durch eine - für LCD-Panels übliche - Antiglare-Mattierungsschicht gebildet wird, welche als zusätzliche Komponente auf den für sichtbares Licht im wesentlichen undurchlässigen Filterelementen 2b aufgebracht ist.

Auch mit diesem Beispiel wird die Entstehung von Störlichtreflexen mit einfachen Mitteln weitestgehend gehemmt und somit die Wahrnehmbarkeit der 3D-Darstellung verbessert.

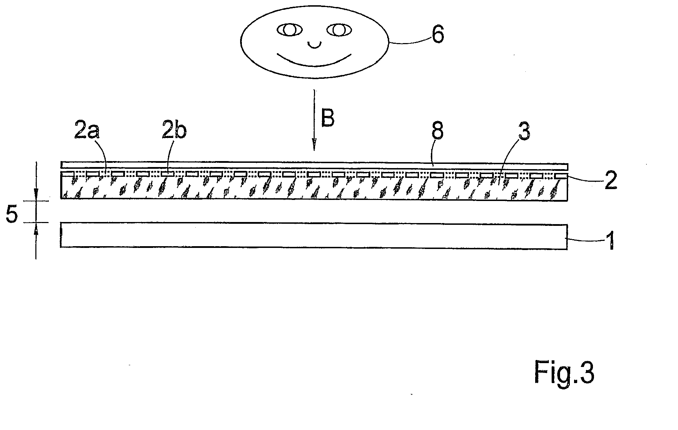

Eine dritte Ausgestaltung der Erfindung ist schließlich in Fig. 3 gezeigt. Die dort gezeigte Anordnung zur dreidimensional wahrnehmbaren Darstellung von Bildern umfasst eine Bildwiedergabeeinrichtung 1 vom Typ NEC LCD4000 mit 1280 Spalten und 768 Zeilen von Vollfarbbildelementen, die in vorgegebener Zuordnung Informationen aus einer oder mehreren Ansichten einer Szene, eines Gegenstandes, oder eines Textes repräsentieren, sowie ein in Blickrichtung B eines Betrachters 6 vor der Bildwiedergabeeinrichtung 1 angeordnetes Filterarray 2, das eine Vielzahl von in bestimmten Wellenlängenbereichen durchlässige Filterelementen 2a sowie von für sichtbares Licht im wesentlichen undurchlässigen Filterelementen 2b umfasst. Ähnlich dem Beispiel aus Fig. 2 sind auch hier die für sichtbares Licht im wesentlichen undurchlässigen Filterelemente 2b in Blickrichtung B eines Betrachters 6 vom auf einem transparenten Substrat 3 in Form einer 3mm dicken, ersten Conturan-Glasscheibe, welche sich im Abstand 5 von 8mm vor der Oberfläche der Bildwiedergabeeinrichtung 1 befindet, aufgebracht sind.

In Blickrichtung B eines Betrachters 6 befindet sich jedoch vor dem Filterarray 2 eine transparente Scheibe 8 in Form einer zweiten, beidseitig mittels Vielfachbeschichtung entspiegelten, ebenfalls 3 mm dicken Conturan-Glasscheibe.

Es sind ausschließlich für sichtbares Licht im Wesentlichen durchlässige und im Wesentlichen undurchlässige, sogenannte opake Filterelemente 2a, 2b auf dem Filterarray 2 vorgesehen. Die einzelnen Filterelemente 2a, 2b des Filterarrays 2 weisen jeweils einen rechteckigen Umriss auf.

Auf dem transparenten Substrat 3, d.h. der ersten Conturan-Glasscheibe, sind die für sichtbares Licht im Wesentlichen undurchlässigen Filterelemente 2b als - bevorzugt matte - schwarze Farbe aufgebracht, z.B. aufgedruckt. Zum Bedrucken eignen sich übliche Siebdruckverfahren, wobei die Farbe durch einen Druckprozess in der Strukturform des Filterarrays 2 aufgebracht wird. Somit ist keine weitere nachträgliche Strukturierung des Filterarrays 2 nötig. Die für sichtbares Licht im Wesentlichen durchlässigen Filterelemente 2a werden dabei einfach durch Weglassen der Farbe auf dem transparenten Substrat 3 gebildet.

Durch die Aufbringung der für sichtbares Licht im Wesentlichen undurchlässigen Filterelemente 2b in Blickrichtung B eines Betrachters 6 vom auf dem transparenten Substrat 3, d.h. der ersten Conturan-Glasscheibe, kann eine recht gute Reflexminderung bezüglich äußeren Störlichts erreicht werden. Gleichzeitig sorgt die beidseitig entspiegelte transparente Scheibe 8 , also die zweite Conturan-Glasscheibe vor dem Filterarray 2 für einen mechanischen Schutz desselben, wobei wegen der beidseitigen Entspiegelung nur eine geringfügige Störlichtempfindlichkeit besteht. Somit wird die Aufgabe, die Entstehung von Störlichtreflexen weitestgehend zu hemmen und gleichzeitig eine hohe Widerstandsfähigkeit der äußeren Anordnungsoberfläche zu erzielen, durch die erfindungsgemäße Anordnung auch in dieser Ausgestaltung gelöst.

Zwischen der transparenten Scheibe 8 und den für sichtbares Licht im Wesentlichen undurchlässigen Filterelementen 2b ist ein mit Luft gefüllter Abstand von ca. 0,5 mm vorgesehen.

Ferner ist zwischen dem transparenten Substrat 3 - der ersten Conturan-Glasscheibe - und der bildgebenden Oberfläche der Bildwiedergabeeinrichtung 1 ein Abstand 5 von 8 mm vorgesehen. Der Abstand wird dabei als von den jeweils einander zugewandten Oberflächen des transparenten Substrates 3 und der Bildwiedergabeeinrichtung 1 gemessen betrachtet.

Auch mit dieser Anordnung wird die Entstehung von Störlichtreflexen weitestgehend gehemmt. Somit wird die Wahrnehmbarkeit der 3D-Darstellung verbessert. Dabei wird gleichzeitig eine hohe Widerstandsfähigkeit der äußeren Anordnungsoberfläche verwirklicht. Die Erfindung ist überdies mit einfachen Mitteln umsetzbar.

### Bezugszeichenliste

- 1.: Bildwiedergabeeinrichtung
- 2: Filterarray 5
- 2a, 2b: Filterelemente
- 3: transparentes Substrat
- 4: Oberfläche des Substrats
- 5: Abstand
- 6: Betrachter
- 7: Oberfläche der Filterelemente
- 8: transparente Scheibe B Betrachter

## Patentansprüche

1. Anordnung zur dreidimensional wahrnehmbaren Darstellung von Bildern, umfassend
eine Bildwiedergabeeinrichtung (1) mit einer Vielzahl von Bildelementen, die in vorgegebener Zuordnung Informationen aus einer oder mehreren Ansichten einer Szene, eines Gegenstandes oder eines Textes repräsentieren,
ein in Blickrichtung (B) eines Betrachters (6) vor der Bildwiedergabeeinrichtung (1) angeordnetes Filterarray (2), das eine Vielzahl von in bestimmten Wellenlängenbereichen durchlässigen Filterelementen (2a) sowie von für sichtbares Licht im wesentlichen undurchlässigen Filterelementen (2b) umfasst,
wobei die Filterelemente (2a, 2b) auf einem transparenten Substrat (3), welches sich vor der Bildwiedergabeeinrichtung (1) befindet, aufgebracht sind,
**dadurch gekennzeichnet, dass**
Mittel zur Verhinderung der Entstehung von Störlichtreflexen vorgesehen sind.

2. Anordnung nach Anspruch 1, **dadurch gekennzeichnet, dass** die für sichtbares Licht im wesentlichen undurchlässigen Filterelemente (2b) in Blickrichtung (B) des Betrachters (6) vom auf dem transparenten Substrat (3) aufgebracht sind und als Mittel zur Verhinderung der Entstehung von Störlichtreflexen eine mindestens auf der dem Betrachter zugewandten Seite entspiegelte, transparente Scheibe (8) in Blickrichtung (B) vor dem Filterarray (2) angeordnet ist.

3. Anordnung nach Anspruch 1 oder 2, **dadurch gekennzeichnet, dass** die transparente Scheibe (8) aus Kunststoff oder Glas besteht und beidseitig mit einer Vielfachbeschichtung entspiegelt ist.

4. Anordnung nach einem der vorgenannten Ansprüche, **dadurch gekennzeichnet, dass** zwischen der transparenten Scheibe (8) und den für sichtbares Licht im Wesentlichen undurchlässigen Filterelementen (2b) ein mit Luft gefüllter Abstand von einschließlich 0 mm bis einschließlich 4 mm vorgesehen ist.

5. Anordnung nach einem der vorgenannten Ansprüche, **dadurch gekennzeichnet, dass** zwischen dem transparenten Substrat (3) und der bildgebenden Oberfläche der Bildwiedergabeeinrichtung (1) eine weitestgehend oder vollkommen transparente, elektrisch leitfähige Scheibe, bevorzugt aus Verbundglas bestehend, angeordnet ist.

6. Anordnung nach einem der Ansprüche 1 bis 4, **dadurch gekennzeichnet, dass** das transparente Substrat (3) eine weitestgehend oder vollkommen transparente, elektrisch leitfähige Glasscheibe ist, welche bevorzugt aus Verbundglas besteht.

7. Anordnung nach Anspruch 1, bei der die für sichtbares Licht im wesentlichen undurchlässigen Filterelemente (2b) in Blickrichtung (B) eines Betrachters (6) vom oder hinten auf dem transparenten Substrat (3) aufgebracht sind, **dadurch gekennzeichnet, dass** diese Filterelemente (2b) zur Verhinderung der Entstehung von Störlichtreflexen eine diffus streuende und / oder matte Oberfläche (7) aufweisen.

8. Anordnung nach Anspruch 7, **dadurch gekennzeichnet, dass** die für bestimmte Wellenlängenbereiche im wesentlichen durchlässigen Filterelemente (2a) für sichtbares Licht im wesentlichen durchlässig sind, wobei
bei vom auf dem transparenten Substrat angebrachten für sichtbares Licht im wesentlichen durchlässigen Filterelemente (2a) diese auf der dem Betrachter (6) zugewandten Seite mit einer Antireflexionsvielfachbeschichtung entspiegelt sind.

9. Anordnung nach einem der Ansprüche 7 bis 8, bei der die für sichtbares Licht im wesentlichen undurchlässigen Filterelemente (2b) in Blickrichtung (B) eines Betrachters (6) vom auf dem transparenten Substrat (3) aufgebracht sind, **dadurch gekennzeichnet, dass** die jeweilige diffus streuende und / oder matte Oberfläche (7) der für sichtbares Licht im wesentlichen undurchlässigen Filterelemente (2b) durch eine Anti-glare-Mattierungsschicht gebildet wird, welche als zusätzliche Komponente auf den für sichtbares Licht im wesentlichen undurchlässigen Filterelementen (2b) aufgebracht ist.

10. Anordnung nach einem der Ansprüche 7 bis 9, **dadurch gekennzeichnet, dass** die für sichtbares Licht durchlässigen Filterelemente (2a) mit einer Vielfachbeschichtung entspiegelt sind.

11. Anordnung nach Anspruch einem der Ansprüche 7 bis 10, **dadurch gekennzeichnet, dass** die für sichtbares Licht undurchlässigen Filterelemente (2b) mit einer Vielfachbeschichtung entspiegelt sind.

12. Anordnung nach einem der vorgenannten Ansprüche, **dadurch gekennzeichnet, dass** das Filterarray (2) als belichteter oder geplotteter, entwickelter fotografischer Film ausgebildet ist, wobei das Plastiksubstrat des Films und optional gleichzeitig eine in Blickrichtung dahinter befindliche Glasscheibe, auf weiche das Plastiksubstrat des Films laminiert ist, dem transparenten Substrat (3) entspricht und wobei die für sichtbares Licht im wesentlichen undurchlässigen Filterelemente (2b) durch die geschwärzte Filmemulsion gebildet werden.

13. Anordnung nach Anspruch 1, bei dem alle Filterelemente (2a, 2b) in Blickrichtung (B) des Betrachters (6) auf der Rückseite des transparenten Substrats (3) aufgebracht sind, **dadurch gekennzeichnet, dass** zur Verhinderung der Entstehung von Störlichtreflexen die in Blickrichtung (B) des Betrachters (6) vordere Seite (4) des transparenten Substrats (3) mit einer entspiegelten Oberfläche versehen ist, wobei nur diejenigen Oberflächenabschnitte der Rückseite des transparenten Substrats (3), auf denen die in bestimmten Wellenlängenbereichen durchlässigen Filterelemente (2a) aufgebracht sind, ebenfalls mit einer entspiegelten Oberfläche versehen sind.

14. Anordnung nach Anspruch 1, bei dem alle Filterelemente (2a, 2b) in Blickrichtung (B) des Betrachters (6) auf der Rückseite des transparenten Substrats (3) aufgebracht sind, **dadurch gekennzeichnet, dass** nur die in Blickrichtung (B) des Betrachters (6) vordere Seite (4) des transparenten Substrats (3) mit einer entspiegelten Oberfläche versehen ist, nicht jedoch die Rückseite.

15. Anordnung nach Anspruch 14, **dadurch gekennzeichnet, dass** die für sichtbares Licht im wesentlichen undurchlässigen Filterelemente (2b) auf einer Folie aufgebracht sind, die auf der Rückseite des transparenten Substrats (3) angebracht, beispielsweise aufgeklebt oder laminiert ist.

16. Anordnung nach Anspruch 15, **dadurch gekennzeichnet, dass** die Brechungsindizes von transparentem Substrat und Klebe- bzw. Laminierschicht, sowie von Klebe- bzw. Laminierschicht und Folie um jeweils nicht mehr als ein Drittel voneinander abweichen.

17. Verfahren zum Herstellen eines Filterarrays (2) zur Verwendung in einer Anordnung nach Anspruch 11 , umfassend die folgenden Verfahrensschritte:
- Aufbringen einer vollflächigen Antiglare-Mattierungsschicht auf einem Filterarray (2),
- Entfernen der matten Oberfläche im wesentlichen derjenigen Flächenabschnitte auf der Antiglare-Mattierungsschicht, die bei paralleler Projektion entlang der Flächennormalen der Antiglare-Mattierungsschicht auf die für sichtbares Licht im wesentlichen durchlässigen Filterelemente (2a) mit selbigen deckungsgleich liegen durch
a) Bestrahlung mit Laserstrahlung, so dass am Ort der besagten Flächenabschnitte hernach eine plane, nicht-streuende Oberfläche entsteht, und/oder
b) Ausschneiden der entsprechenden Flächenabschnitte, z.B. mittels eines Schneidwerkzeuges oder einer Stanze, und/oder
c) Aufschmelzen und Abkühlen der entsprechenden Flächenabschnitte, so dass am Ort der besagten Flächenabschnitte hernach eine plane, nicht-streuende Oberfläche entsteht, und/oder
d) Anätzen der entsprechenden Flächenabschnitte mittels einer Säure, so dass am Ort der besagten Flächenabschnitte hernach eine plane, nicht-streuende Oberfläche entsteht.

18. Verfahren zum Herstellen eines Filterarrys (2) zur Verwendung in einer Anordnung nach einem der Ansprüche 7 bis 10, umfassend die folgenden Verfahrensschritte:
Bereitstellen eines Filterarrays (2), dessen für sichtbares Licht im Wesentlichen undurchlässige Filterelemente (2b) auf einem transparenten Substrat (3) aufgebracht sind,
Schaffen einer diffus streuenden und/oder matten Oberfläche auf den für sichtbares Licht im wesentlichen undurchlässigen Filterelemente (2b) durch
a) Bestrahlung der besagten Filterelemente (2b) mit Laserstrahlung, so dass dort hernach eine diffus streuende und/oder matte Oberfläche (7) entsteht, und/oder
b) Mechanisches Anrauhen der besagten Filterelemente (2b), so dass dort hernach eine diffus streuende und/oder matte Oberfläche (7) entsteht, und/oder
c) Aufschmelzen und Abkühlen der besagten Filterelemente (2b), so dass dort hernach eine diffus streuende und/oder matte Oberfläche (7) entsteht, und/oder
d) Anätzen der besagten Filterelemente (2b) mittels einer Säure, so dass dort hernach eine diffus streuende und/oder matte Oberfläche (7) entsteht.
